# EUROPEAN PATENT SPECIFICATION

(11) **EP 0 217 938 B1**
(45) Date of publication and mention of the grant of the patent: **16.06.1993**
(21) Application number: 86902695.5
(22) Date of filing: 11.04.1986
(51) Int. Cl.: H04N 5/265, H04N 5/275

(54) **APPARATUS AND METHOD FOR PROCESSING PREVIOUSLY PROCESSED VIDEO SIGNALS**
VORRICHTUNG UND VERFAHREN ZUM VERARBEITEN VON FRÜHER VERARBEITETEN VIDEOSIGNALEN
APPAREIL ET PROCEDE DE TRAITEMENT DE SIGNAUX VIDEO PREALABLEMENT TRAITES

(30) Priority: 12.04.1985 US 722532
(43) Date of publication of application: 15.04.1987
(73) Proprietor: AMPEX CORPORATION, Redwood City California 94063-3199 (US)
(72) Inventor: BLOOMFIELD, John, F., San Francisco, CA (US)
(74) Representative: Horton, Andrew Robert Grant
(86) International application number: US8600734
(87) International publication number: WO8606234

(56) References cited:
- EP-A- 0 160 549
- US-A- 4 334 245
- US-A- 4 360 831
- US-A- 4 420 770
- US-A- 4 488 169

## Description

This invention relates generally to signal gain control and in its broadest aspect the invention provides a method of adjusting the gain of an input signal to produce a gain-adjusted signal, comprising: supplying an input key signal of which the value denotes the gain of the said input signal relative to a reference level; supplying a request key signal of which the value denotes the desired gain for the gain-adjusted signal; and adjusting the gain of the input signal in accordance with the ratio of the request key signal to the input key signal.

The invention more particularly relates to the control of the gain of video signals in accordance with a plurality of independently related video signal gain determining key signals.

In television production it is often desirable to process a portion of a television signal less than the standard full field raster. For example, a common function of a digital special effects system is to compress a full field of video to a smaller size. In such a field of video, only the area corresponding to the compressed video image is of interest. The surrounding display area contains no information of interest. When this video signal is outputted to utilization devices, it is desirable for that device to know what area to process. This is the function of a matte or key signal that accompanies the compressed or otherwise processed video signal and defines the gain throughout the video signal interval.

A matte or video signal gain defining key signal effectively specifies the area of interest or the area to be processed. Key signals are commonly created during the processing of a video signals, but can also be independently created. For example, a key signal can be independently created that represents the selected shapes. Television signals are commonly created by television cameras, graphic art generators and other devices. Key signals can be created by dedicated key signal generators, digital special effects units, and other video signal processing devices. A chroma-key generator creates a key signal corresponding to a specific color found in an input video signal and can be used as a video signal gain defining key. For example, if the video signal from a camera receiving an image of an object against a blue background and chroma-keyed on the blue color background, the previously an object key could be produced, In the example above with the digital special effects system, a key signal can be created that corresponds to the area of the compressed field of video.

A video gain defining key signal is used to control the gain video signals over a range and with a resolution determined by the range and number of values the key signal can take. Normally, such keys are linear so that there is a one to one correspondence between each part of the key signal and the video signal. Typically, the gain of a video signal is adjusted by the key signal by multiplying the level of the video signal by the key signal. When operating in the analog domain, the instantaneous level or amplitude of the video signal is multiplied with the instantaneous value of the key signal on a continuous basis. Ordinarily, an analog key signal has a value between zero and one.

A digital video signal is composed of discrete digitally encoded samples defining pixels that define the video image. Each pixel may be defined by a plurality of different components, such as a single luminance and a pair of chrominance components. In systems for such video signals a digital key signal is used having a value between zero and one for each pixel of the video image. When processed, each pixel of the video signal is processed with its corresponding key signal.

The value of a key signal often varies with time. In an analog system, the key value has an instantaneous value that changes with time, whereas in a digital system each pixel may have an associated key value.

One type of key signal is a bi-state key signal. This type of key signal has either a value of zero or one. When processed with a video signal, the portion of the key signal that has a value of zero is multiplied with the corresponding portion of the video signal to yield a processed or keyed video signal of zero. This portion of the keyed video signal appears as black when viewed on a monitor. The portion of the video signal that is processed with a key signal that has a value of one remains unchanged and is viewed on a monitor unchanged. In the aforediscussed object example, the portion of the key signal outside the representation of the object has a value of zero. The portion of the key signal corresponding to the inside of the object has a value of one.

The value of a key signal often is correspondingly processed proportionately with the gain of the video signal. If the values of two key signals are processed with their respective video signals representing two objects, the result would be a display of one of the objects shaped in the form of the other.

Another type of key signal is a linear key signal. Unlike the bi-state key signal which is restricted to either a value of zero or one, a linear key signal may have several values between zero and one. Whereas, with the bi-state key signal, one typically indicates the presence of the video signal and zero the absence of the the video signal, the value of the linear key signal represents a continuum of change in gain of the video signal.

When a video signal is processed with a linear key signal, the corresponding signals are multiplied, as with the bi-state key signal, but because the linear key can have any value between zero and one, the gain of the video signal can be adjusted to any value between zero and one. For example, if a point in a video signal is process with a linear key that has a value of 0.5, the gain of the video signal would be reduced in gain by one half. When viewed on a monitor, the video signal would look semi-transparent.

In combining typical video signals, the total gain of the two signals is never made more than one. Two video signals of nominal gain would not be directly added, as their total gain would be two. Adjusting the gain of a video signal with a key signal is one method of reducing the gain of video signals so that they can be combined with other video signals. Adding two gain adjusted video signals, each of which has been multiplied with a key signal of 0.5, would be permissible, as the gain of the combined video signals would only be one. The resulting video signal when viewed on a monitor would be both video signals.

One method of combining two video signals whose gains are nominal, i.e., not reduced, is to use an independent or external key signal to process the video signals. In this method, the independent key signal determines the amount of each of the two signals present in the combined mixed video signals. The gain of one of the video signals is reduced directly by the key signal in a video processor, which multiplies the video signal by the key signal. The gain of the other video signal is reduced by one minus the value of the key signal, which is determined by a 1-K key processor.

Generally, the gain of a video signal is processed by a key signal as a last step prior to output. There are situations, though, where it is necessary to process a video signal whose gain has been previously adjusted by another key signal. The way this is done is to adjust the gain of the video signal without regard to the previous gain adjustment.

If, in the above example, the gain of the video signal had been previously reduced at a point, by a key signal of 0.5, its gain would be 0.5 of its original value. When its gain is reduced further by an independent key of, for example, 0.3, the result gain of the signal is reduced to 0.15. When combined with the second video signal, the combined video signal gain is only 0.85. This is undesirable for two reasons. First, the independent key value of 0.3 is considered the desired value for the gain of the video signal. Because this video signal had already been reduced in gain, the processing by the independent key reduces its gain to a level below the desired level. Secondly, it is very desirable to fully use all the gain available for the combined video signal. The combined video signal, in this example, only has a gain of 0.85, not the desired 1.0.

A desirable method of combining one or more gain adjusted video signals, would take into account any previous gain adjustments of the video signals. There is a need for a method and apparatus which is able to combine previously gain adjusted video signals so as to obtain video signals with the desired gain.

The present invention overcomes the limitations of the previous method by taking into account the previous gain reduction of a video signal.

When gain adjusting a video signal with an independent key signal, the independent key signal is considered the desired level of gain reduction. If the video signal has already been reduced in gain below the level of the independent key signal, it is preferred not to reduce its gain further. This is because when the gain on a video signal is reduced, information is lost. That lost information cannot be recovered by raising the gain of video signal. Raising the gain adds false information or noise to the video signal.

If the video signal has been reduced in gain by an amount less than the desired level called for by the independent key signal, then the video signal may be processed with a process key signal that is the ratio of the independent key signal to the key signal used to previously adjust the gain of the video signal. The result of adjusting the gain with the process key signal is that the video signal is reduced in gain by the precise amount to bring the total gain reduction as specified by the independent key.

According to an embodiment of the invention there is provided apparatus for adjusting the gain of an input video signal in response to a request key signal to produce an output-video signal having a selected gain, said request key signal having a value indicating a desired gain for said output video signal, wherein the gain of the input video signal is identified by the value of an input key signal and the value of the input key signal signifies the gain of the input video signal relative to a reference level, the apparatus being arranged to adjust the gain of said input video signal in accordance with the ratio of the request key signal to the input key signal.

The means for adjusting may comprise means for multiplying the video signal in accordance with the reciprocal of the input key signal and means for multiplying the video signal in accordance with the request key signal.

According to another embodiment of the invention there is provided apparatus for adjusting the gain of an input video signal response to a request key signal to produce an output video signal having a selected gain, said request key signal having a value indicating a desired gain for said output video signal, wherein said gain of said input video signal is identified by the value of an input key signal and said value of the input key signal signifies the gain of the input video signal relative to a reference level, comprising: means for computing the ratio of said request key signal to said input key signal; and means for adjusting the gain of said input video signal in accordance with said ratio to yield said output video signal having said selected gain.

According to yet another embodiment of the invention there is provided apparatus for adjusting the gain of first and second input video signals in response to a request key signal to produce an output video signal having a selected gain, said request key signal having a value indicating a desired gain for said output video signal, wherein said gain of said first input video signal is identified by the value of an input key signal and said value of said input key signal signifies the gain of said first input video signal relative to a reference level, comprising: means for computing the ratio of the request key signal to said input key signal; means for adjusting the gain of said first input video signal in accordance with said ratio to yield a first gain adjusted video signal; an input for receiving the second input video signal means for subtracting the request key signal from a reference gain to generate a difference key signal; means for adjusting the gain of the second input video signal by said difference key signal to yield a second gain adjusted second video signal; and means for combining the second gain adjusted video signal with the first gain adjusted video signal to provide the output video signal.

According to yet another embodiment of the invention there is provided apparatus for adjusting the gain of first and second input video signals in response to a first request key signal and a second request key signal and for combining the two gain adjusted video signals so produced to produce an output video signal having a selected gain, wherein said first request key signal has a value indicating a desired gain for the first input video signal, said second request key signal has a value indicating a desired gain for the second input signal, the gain of the first input video signal relative to a reference level is identified by the value of a first input key signal and the gain of the second input video signal relative to a reference level is identified by the value of a second input key signal the apparatus comprising: means for computing the ratio of the first request key signal to the first input key signal to generate a first processing key signal; means for adjusting the gain of said first input video signal in accordance with said first processing key signal to yield a first gain adjusted video signal; an input for receiving the second input video signal; means for subtracting the first request key signal from a reference gain to generate a difference key signal; means for receiving said difference key signal and said second input key signal and for outputting the minimum of said difference and said second input key signals as the second request signal; means for computing the ratio of said second request key signal to the second input key signal to generate a second processing key signal; means for adjusting the gain of said second input video signal in accordance with the second processing key signal to yield a second gain adjusted video signal; and means for combining said second gain adjusted video signal with said first gain adjusted video signal to generate the output video signal having said selected gain.

In all the foregoing embodiments there may be means for receiving an independent key signal and a first input key signal and for outputting the minimum of said independent and first input key signals as the first request key signal.

Further features and advantages of the present invetion will be apparent from the specific examples described hereinafter with reference to the accompanying drawingss, in which:
Figure 1 is a schematic block diagram of one embodiment of a system for combining video signals of different possible gains in accordance with the present invention;
Figure 2 is a schematic block diagram of another embodiment of a system for combining video signals of different possible gains in accordance with the present invention;
Figure 3 is a schematic block diagram of a further embodiment of a system for combining video signals of different possible gains in accordance with the present invention;
Figure 4 is a schematic block diagram of one embodiment of a circuit for adjusting the gain of video signals in accordance with the present invention;
Figure 5 is a schematic block diagram of another embodiment of a circuit for adjusting the gain of video signals in accordance with the present invention; and
Figure 6 is a schematic block diagram of a further embodiment of a circuit for adjusting the gain of video signals in accordance with the present invention.

In accordance with the present invention, video and key signals may either be digital or analog, although the preferred system is digital. In an analog system, video signals are processed continuously with their corresponding key signals, although, at any one point in time, only one point in the video signal is being processed with the corresponding point in the key signal.

Further, the discussed embodiments use one or more of six basic circuit elements. Each element can easily be implemented in a variety of ways in either an analog or digital system by a person skilled in the art. Video processors used to process a video signal with a key signal can be implemented in a digital system as a digital multiplier. These are commonly available in standard integrated circuit packages. In an non-real time system, the video processor could be implemented with a microprocessor. An analog video processor can be implemented as a simple analog multiply circuit.

Another circuit element, is a video combiner. The video combiner is used to combine processed video signals to form an output video signal. In a digital system, this element is easily implemented as a digital adder, which is also commonly available in standard integrated circuit packages. In an analog system, the video combiner can implemented as a simple mixing circuit.

A common element to each embodiment is a minimum processor. The minimum processor is used to determine the minimum value between two key signals. In a digital system, this is accomplished by a digital comparator which outputs the minimum value between the two input values. In a digital system, these values are discrete numbers fed serially to the minimum processor. In an analog system, a minimum circuit is conveniently implemented as an analog AND gate, which has the precise desired property.

Yet another element is a 1-K processor, which is used to determine the key signal remainder. In a digital system, a digital adder can be used to add the negative of the input key signal to one. In an analog system the key signal is routinely subtracted from a reference level signal to produce the desired output.

A key processor is used to determine the sum of two key signals. In a digital system, this can be implemented as a common digital adder. These are available in standard integrated circuit packages. In an analog system, the combiner can be implemented as analog add circuit.

Lastly, another element is a ratio processor. The ratio processor divides one key by another to form their ratio. The ratio processor determines the proper key signal with which to process the already processed video signal. In a digital system, this can be implement by arithmetic processor chip, which are commercially available. The preferred method of implementation is to use a look-up table in a ROM-type memory. While this implementation limits the resolution available, it is fast and low-cost. Analog division circuits are known in the art and can be constructed by a person skilled in the art.

Three embodiments of the present invention will be discussed. The first is a system to process an already processed video signal according to an independent key. This basic circuit is used in both other embodiments. The second system is for combining a processed video signal with an unprocessed video signal according to an independent key signal. The third embodiment combines two processed video signals according to an independent key signal. It is understood that these embodiments are merely exemplary of the present invention.

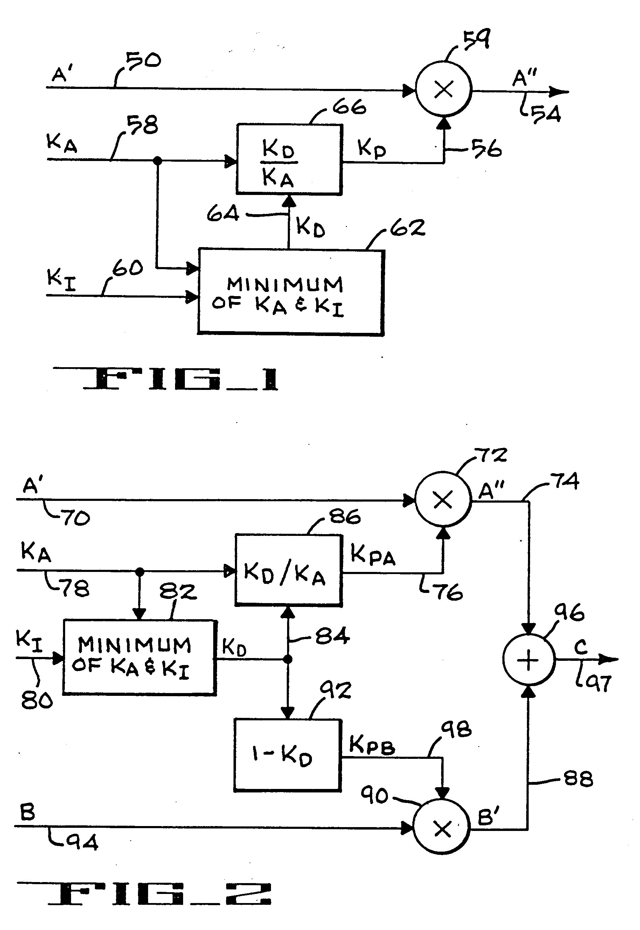

Referring now to Figure 1, a previously processed video signal A', 50, is fed to a video processor 59 to produce twice processed video signal A'', 54. Video signal A' is processed with a processing key signal K_{P}, 56.

Key signal K_{P}, 56, is generated from the associated key signal K_{A}, 58, of video signal A', 50, and independent key signal K_{I}, 60. The associated key signal K_{A}, 58, is not used to process the video signal A', 50, but rather is used as an indicator of previous processing of the video signal. The independent key indicates the desired level of gain reduction for the outputted video signal. If the processed video signal A', 50 has been processed with a key signal which has reduced its gain below the level of the independent key signal K_{I}, then no further gain reduction should occur.

It is the task of minimum processor 62 to determine whether key signal K_{A}, 58, indicates that the video signal A', 50, has already been reduced in gain by the same amount or more than the independent key signal K_{I}. If key signal K_{A}, 58, is less than K_{I}, 60, then minimum processor 62 outputs key signal K_{A}, 58, as the request key signal K_{D}, 64. If key signal K_{A}, 58, is more than K_{I}, 60, then minimum processor 62 outputs key signal K_{I}, 60, as the request key signal K_{D}, 64. If the two signals K_{A} and K_{I} are equal, then either signal may be outputted.

The output of minimum processor 62 is fed to ratio processor 66. Key signals K_{A}, 58, and K_{D}, 64, are inputted to ratio processor 66, which determines the ratio of K_{D} divided by K_{A}. That ratio is outputted as processing key signal K_{P}, 56, which is used to process video signal A', 50 into video signal A'', 54.

If K_{D} is K_{A} because the video signal has already been reduced in gain by more than independent key signal A', 50, then the ratio will simply be K_{A} divided by K_{A} (i.e. unity). Video signal A', 50, will then be processed by unity, which will not change its value. This is exactly the result desired as video signal A', 50 was already reduced in gain by more than the independent key signal K_{I}, 60, thus no further reduction of gain was desired.

In the case where K_{D} is K_{I}, then a ratio will be formed that reduce the gain of video signal A', 50, by an amount such that video signal A'', 54, will have been reduced in gain as if it had been processed by key signal K_{I}, 60, alone, instead of by K_{A}, 58, and K_{P}, 54, separately.

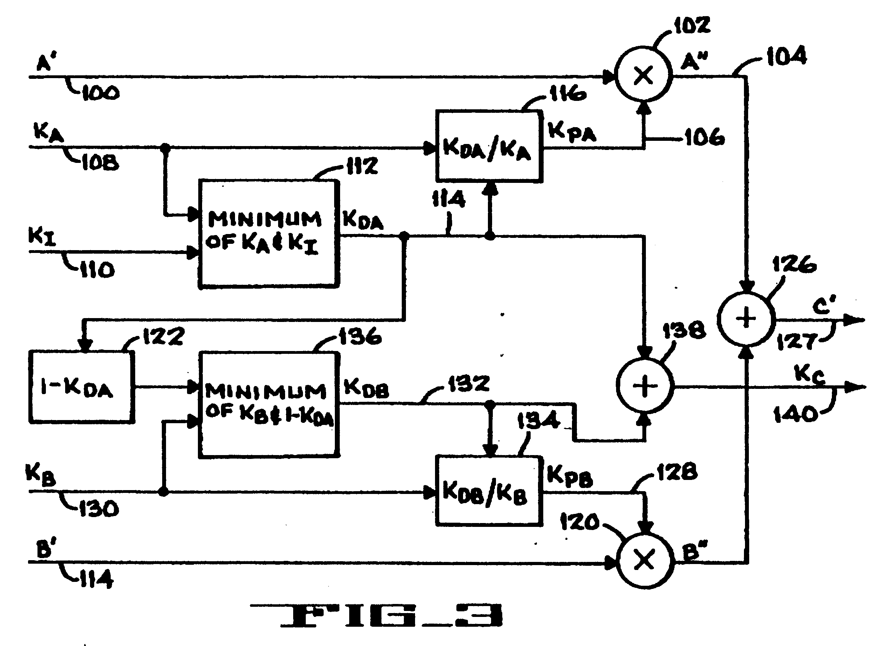

Figure 2 illustrates a system to combine a processed and unprocessed video signal according to an independent key. The system in Figure 2 is based largely on Figure 1, in that the processing of video signal A' into A'' from key signals K_{A} and K_{I} is identical. A previously processed video signal A', 70, is fed to a video processor 72 to produce twice processed video signal A'', 74. Video signal A' is processed with a processing key signal K_{PA}, 76.

Key signal K_{PA}, 76, is generated from the associated key signal K_{A}, 78, of video signal A', 70, and independent key signal K_{I}, 80. It is the task of minimum processor 82 to determine whether key signal K_{A}, 78, indicate that the video signal A', 70, has already been reduced in gain by the same amount or more than the independent key signal K_{I}. If key signal K_{A}, 78, is less than K_{I}, 80, then minimum processor 82 outputs key signal K_{A}, 78, as key signal K_{D}, 84.
If key signal K_{A}, 78, is more than K_{I}, 80, then minimum processor 82 outputs key signal K_{I}, 80, as key signal K_{D}, 84. The output of minimum processor 82 is fed to ratio processor 86. Key signals K_{A}, 78, and K_{D}, 84, are inputted to ration processor 86, which determines the ratio of K_{D} divided by K_{A}. That ratio is outputted as processing key signal K_{PA}, 76, which is used to process video signal A', 70 into video signal A'', 74.

Twice processed video signal A'', 74, is fed to video combiner 96, where it is combined with once processed video signal B, 88, to form an output video signal C, 97. Video signal B', 88 is processed with the remainder of key signal K_{D}, 84, processing key signal K_{PB}, 98. When combined, the video signals A'', 74, and B', should have been reduced in gain such that the keys signals used to process them, K_{A}, 78, K_{PA}, 76, and K_{PB}, should add up to be less or equal to one. By design, video signal A' is reduced in gain by at least the value of K_{I}, 80, and therefore, video signal B, 94 should be reduced in gain by 1-K_{D}.

1-K_{D} processor 92, takes the output of minimum processor 82, K_{D}, 84, and subtracts it from one to form K_{PB}, 98, which it outputs to video processor 90. Using key signal K_{PB}, 98, video processor 90, processed video signal B, 94, into processed video signal B', 88.

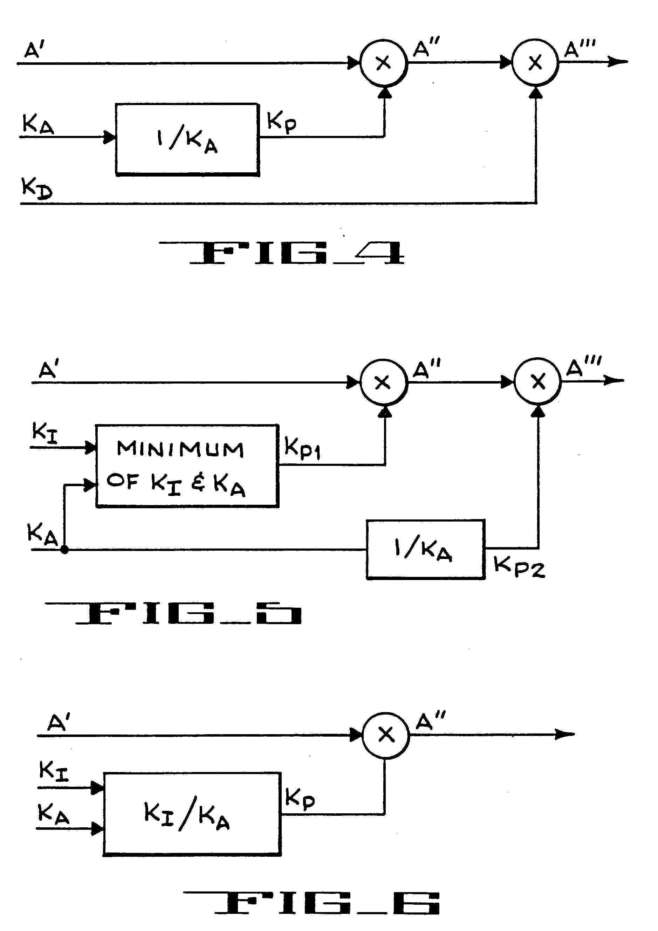

Referring now to Figure 3, which illustrates a system to combine two processed video signals according to an independent key. The system in Figure 3 is based largely on Figure 2, in that the processing of video signal A' into A'' from key signals K_{A} and K_{I} is identical. A previously processed video signal A', 100, is fed to a video processor 102 to produce twice processed video signal A'', 104. Video signal A' is processed with a processing key signal K_{PA}, 106.

Key signal K_{PA}, 106, is generated from the associated key signal K_{A}, 108, of video signal A', 100, and independent key signal K_{I}, 110. If key signal K_{A}, 108, is less than K_{I}, 110, then minimum processor 112 outputs key signal K_{A}, 108, as key signal K_{D}, 114. If key signal K_{A}, 108, is more than K_{I}, 110, then minimum processor 112 outputs key signal K_{I}, 110, as key signal K_{D}, 114. The output of minimum processor 112 if fed to ratio processor 116. Key signals K_{A}, 108, and K_{D}, 114, are inputted to ration processor 116, which determines the ratio of K_{D} divided by K_{A}. That ratio is outputted as processing key signal K_{PA}, 106, which is used to process video signal A', 100 into video signal A'', 104.

Twice processed video signal A'', 104, is fed to video combiner 126, where it is combined with twice processed video signal B'', 118, to form an output video signal C', 127. Video signal B', 118 is processed with the remainder of key signal K_{D}, 114, processing key signal K_{PB}, 128. When combined, the video signals A'', 104, and B'', should have been reduced in gain such that the keys signals used to process them, K_{A}, 108, K_{PA}, 106, K_{B}, 130 and K_{PB}, 128, should add to less or equal to one. By design, video signal A' is reduced in gain by at least the value of K_{I}, 110, and therefore, video signal B', 124 should similarly be processed with 1-K_{DA}, 114. The processing of video signal B', 114 is identical to that of video signal A', except that instead of using independent key signal K_{I}, 110, 1-K_{DA} is used as the independent key signal to the video signal B' processing part of the system.

1-K_{D} processor 122, takes the output of minimum processor 112, K_{D}, 114, and subtracts it from one to form 1-K_{DA}, 122, which it outputs to minimum processor 136. Minimum processor 136, determines the minimum between K_{B} and 1-K_{DA} and outputs a key signal K_{DB} to ratio processor 134. Ratio processor 134 divides K_{DB}, 132, by K_{B}, 130, to produce processing key signal K_{PB}, 128, which is used by video processor 120 to process video signal B', 114, into video signal B'', 118. Video combiner 126 adds video signals A'', 104, and B'', 118, to form the output video signal C'.

In the system of Figure 2, the output video signal C, 97, is considered an unprocessed video signal by any downstream usage device. This is because, the amount that video signals A'', 74, and B', 88, have been reduced in gain by an amount totaling one, because of the design of the system. If Figure 3, because both video signals A', 100 and B', 114 have been previously reduced in gain prior to being processed by the system, it is possible that either or both have been reduced below the level requested by the independent key signal K_{I}. When this occurs, the amount that video signals A'', 104, and B'', 118 have been reduced in gain could total one or less. This is the value of key signal K_{C}, 127, and is formed from the sum key signals K_{DA}, 114, and K_{DB}, 132, which represent the actual reductions in gain of video signals A'', 104, and B'', 118, respectively. The sum is determined by key combiner 138.

In summary, the above three embodiments all implement a form of the present invention. Common to each is the initial determination as to whether the processed video signal or signals have already been reduced in gain by more than that requested by the independent key signal. If it has been reduced in gain by more than that requested, then the video signal is processed by a key signal of one, which results in no further reduction of gain. If the video signal has been reduced in gain by less than that requested, then a processed key signal is determined which, when used to process the video signal, reduces the gain on the video signal by amount such that the total reduction in gain on the video signal is the amount requested by the independent key signal.

In the embodiment of Figure 2, the unprocessed video signal is processed with the remainder of the key signal not used to process the processed video signal. The results in a new video signal which is a combination of the the two video signals that has a net reduction in gain of one.

In the embodiment of Figure 3, the second processed video signal is processed with the remainder of the key signal not used to process the processed video signal as its independent key signal. The results in a new video signal which is a combination of the the two video signals that has a net reduction in gain of one or less. Thus this system also outputs an associated key signal indicating the total reduction in gain.

Referring to Figure 4, the input video signal A' has its gain adjusted in accordance with the value of a request key signal K_{D} and the reciprocal of the value of an input key signal K_{A} in successive and separate steps by a pair of multipliers in the communication line of the input video signal A'. The input key signal K_{A} has a value that indicates the gain of the input video signal. This indicated gain signifies the gain of the input video signal A' relative to a reference gain, typically unity. As a result of the two multiplications, a output video signal A''' is provided having a selected gain determined by the value of the request key signal K_{D}. In the embodiment illustrated by Figure 4, the two multiplications are shown as having the video signal A' gain first adjusted by the reciprocal of the value of the input key signal K_{A} and, thereafter, by the request key signal K_{D}. The sequence of multiplications however can be reversed.

Moreover, referring to Figure 6, an independent key signal K_{I} (constituting in this embodiment a request key signal also) and an input key signal K_{A} can be combined in a inversely proportional relationship relative to the input key signal K_{A}, whereby the input video signal A' only has to be multiplied once to form the desired output video signal A'''.

Referring to Figure 5, an embodiment is shown similar to the embodiment of Figure 1. As illustrated therein, a minimum operation is performed on the two key signals K_{A} and K_{I} to determine whose value indicates a smaller video signal gain. Whichever key signal indicates the smaller gain value is output by the minimum circuit to the first multiplier in the input video signal path. The second multiplier in that path receives the reciprocal of the input key signal to multiply the output of the first multiplier, and thereby provide the output video signal A''' with the desired gain.

## Claims

1. An apparatus for adjusting the gain of an input video signal (A') in response to a request key signal (K_{D}) to produce an output video signal having a selected gain, said request key signal having a value indicating a desired gain for said output video signal, wherein the gain of the input video signal is identified by the value of an input key signal (K_{A}), and the value of the input key signal signifies the gain of the input video signal (A') relative to a reference level, the apparatus being arranged to adjust the gain of said input video signal in accordance with the ratio of the request key signal to the input key signal.

2. Apparatus according to claim 1 further comprising means for receiving an independent key signal (K_{I}) and said input key signal (K_{A}) and for outputting the minimum of said independent key signal and said input key signal as said request key signal (K_{D}).

3. Apparatus according to claim 1 or claim 2 wherein the gain of the input video signal is adjusted by means for multiplying the video signal in accordance with the reciprocal of the input key signal and means for multiplying the video signal in accordance with the request key signal (K_{D}).

4. An apparatus for adjusting the gain of an input video signal (A') in response to a request key-signal (K_{D}) to produce an output video signal (A'') having a selected gain, said request key signal (K_{D}) having a value indicating a desired gain for said output video signal, wherein said gain of said input video signal is identified by the value of an input key signal (K_{A}) , and said value of the input key signal signifies the gain of the input video signal relative to a reference gain, comprising:
means (66) for computing the ratio (K_{D}/K_{A}) of said request key signal to said input key signal; and
means (59) for adjusting the gain of said input video signal in accordance with said ratio to yield said output video signal having said selected gain.

5. Apparatus according to claim 4 further comprising means (62) for receiving an independent key signal (K_{I}) and said input key signal (K_{A}) and for outputting the minimum of those two key signals as said request key signal (K_{D}).

6. An apparatus for adjusting the gain of first and second input video signals (A',B) in response to a request key (K_{D}) signal to produce an output video signal having a selected gain, said request key signal having a value indicating a desired gain for said output video signal, wherein said gain of said first input video signal is identified by the value of an input key signal (K_{A}) and said value of said input key signal signifies the gain of said first input video signal relative to a reference level, comprising:
means (86) for computing the ratio of the request key signal to said input key signal;
means (72) for adjusting the gain of said first input video signal in accordance with said ratio to yield a first gain adjusted video signal (A'');
an input (94) for receiving the second input video signal;
means (92) subtracting the request key signal from a reference gain to generate a difference key signal (1-K_{D});
means (90) for adjusting the gain of the second input video signal by said difference key signal to yield a second gain adjusted video signal (B'); and
means (96) for combining the second gain adjusted video signal with the first gain adjusted video signal to provide the output video signal.

7. Apparatus according to claim 6 further comprising means (82) for receiving an independent key signal (K_{I}) and said input key signal (K_{A}) and for outputting the minimum of those two key signals as said request key signal.

8. An apparatus for adjusting the gain of first and second input video signals (A',B') in response to a first request key signal (K_{DA}) and a second request key signal (K_{DB}) and for combining the two gain adjusted video signals (A'',B'') so produced to produce an output video signal (C') having a selected gain, wherein said first request key signal has a value indicating a desired gain for the first input video signal, said second request key signal has a value indicating a desired gain for the second input signal, the gain of the first input video signal relative to a reference level is identified by the value of a first input key signal (K_{A}) and the gain of the second input video signal relative to a reference level is identified by the value of a second input key signal (K_{B}), the apparatus comprising:
means (116) for computing the ratio of the first request key signal to the first input key signal to generate a first processing key signal (K_{PA});
means (102) for adjusting the gain of said first input video signal in accordance with said first processing key signal to yield a first gain adjusted video signal;
an input for receiving the second input video signal;
means (112) for subtracting the first request key signal from a reference gain to generate a difference key signal (1-K_{DA});
means (136) for receiving said difference key signal (1-K_{DA}) and said second input key signal (K_{B}) and for outputting the minimum of said difference and said second input key signals as the second request signal (K_{DB});
means (134) for computing the ratio of said second request key signal to the second input key signal to generate a second processing key signal (K_{PB});
means (120) for adjusting the gain of said second input video signal in accordance with the second processing key signal to yield a second gain adjusted video signal; and
means (126) for combining said second gain adjusted video signal with said first gain adjusted video signal to generate the output video signal having said selected gain.

9. Apparatus according to claim 8 further comprising means (112) for receiving an independent key signal (K_{I}) and said first input key signal (K_{A}) and for outputting the minimum of said independent and first input key signals as said first request key signal (K_{DA}).

10. A method of adjusting the gain of an input signal (A') to produce a gain-adjusted signal, comprising:
supplying an input key signal (K_{A}) of which the value denotes the gain of the said input signal relative to a reference level;
supplying a request key signal (K_{I}) of which the value denotes the desired gain for the gain-adjusted signal; and
adjusting the gain of the input signal in accordance with the ratio of the request key signal to the input key signal.

11. A method according to claim 10 in which the said ratio is computed by forming the reciprocal of the input key signal (K_{A}) and the step of adjusting comprises multiplying the input signal by the said reciprocal (1/K_{A}) and by the request key signal (K_{I}).

12. A method according to claim 9 or 10 in which the request key signal is obtained from the minimum of the said input key signal and an independent key signal.

13. A method according to any of claims 10 to 12, further comprising:
subtracting the request key signal (K_{D}) from the reference gain to produce a difference key signal (1-K_{D});
supplying a second input signal (B'); and
adjusting the gain of the second input signal in accordance with the difference key signal.

14. A method according to any of claims 10 to 12 further comprising:
subtracting the request key signal (K_{DA}) from the reference gain to produce a difference key signal (1-K_{DA});
supplying a second input signal (B') accompanied by a second input key signal (K_{B}) of which the value denotes the gain of the second input signal (B') relative to a reference gain;
forming from the minimum of the difference key signal and the second input key signal a second request key signal (K_{DB});
and adjusting the gain of the said second input signal (B') in accordance with the ratio of the second request key signal (K_{DB}) to the second input key signal (K_{B}).

15. A method according to any of claims 10 to 14 in which the or each input signal (A';B') is a video signal.

## Patentansprüche

1. Schaltungsanordnung zur Einstellung der Verstärkung eines Eingangsvideosignals (A') in Abhängigkeit von einem Anforderungstastsignai (K_{D}) zwecks Erzeugung eines Ausgangsvideosignals mit ausgewählter Verstärkung, wobei das Anforderungstastsignal einen ein Maß für eine gewünschte Verstärkung für das Ausgangsvideosignal darstellenden Wert besitzt, die Verstärkung des Eingangsvideosignals durch den Wert eines Eingangstastsignals (K_{A}) identifiziert ist, der Wert des Eingangstastsignals die Verstärkung des Eingangsvideosignals (A') relativ zu einem Bezugssignal angibt und die Anordnung so getroffen ist, daß die Verstärkung des Eingangsvideosignals in Abhängigkeit vom Verhältnis des Anforderungstastsignals und des Eingangstastsignals eingestellt wird.

2. Schaltungsanordnung nach Anspruch 1, mit einer Schaltung zur Aufnahme eines unabhängigen Tastsignals (K_{I}) und des Eingangstastsignals (K_{A}) sowie zur Ausgabe des Minimums des unabhängigen Tastsignals und des Eingangstastsignals als Anforderungstastsignal (K_{D}).

3. Schaltungsanordnung nach Anspruch 1 oder 2, in welcher die Verstärkung des Eingangsvideosignals durch eine Schaltung zur Multiplikation des Videosignals in Abhängigkeit vom Kehrwert des Eingangstastsignals sowie durch eine Schaltung zur Multiplikation des Videosignals in Abhängigkeit vom Anforderungstastsignal (K_{D}) eingestellt wird.

4. Schaltungsanordnung zur Einstellung der Verstärkung eines Eingangsvideosignals (A') in Abhängigkeit von einem Anforderungstastsignal (K_{D}) zwecks Erzeugung eines Ausgangsvideosignals (A'') mit ausgewählter Verstärkung, wobei das Anforderungstastsignal (K_{D}) einen ein Maß für eine gewünschte Verstärkung für das Ausgangsvideosignal darstellenden Wert besitzt, die Verstärkung des Eingangsvideosignals durch den Wert eines Eingangstastsignals (K_{A}) identifiziert ist und der Wert des Eingangstastsignals die Verstärkung des Eingangsvideosignals relativ zu einem Bezugspegel angibt, mit
einer Schaltung (66) zur Berechnung des Verhältnisses (K_{D}/K_{A}) des Anforderungstastsignals und des Eingangstastsignals sowie einer Schaltung (59) zur Einstellung der Verstärkung des Eingangsvideosignals in Abhängigkeit des Verhältnisses zwecks Erzeugung des die ausgewählte Verstärkung besitzenden Ausgangsvideosignals.

5. Schaltungsanordnung nach Anspruch 4 mit einer Schaltung (62) zur Aufnahme eines unabhängigen Tastsignals (K_{I}) und des Eingangstastsignals (K_{A}) sowie zur Ausgabe des Minimums dieser beiden Tastsignale als Anforderungstastsignal (K_{D}).

6. Schaltungsanordnung zur Einstellung der Verstärkung eines ersten und zweiten Eingangsvideosignals (A', B') in Abhängigkeit von einem Anforderungstastsignal (K_{D}) zwecks Erzeugung eines Ausgangsvideosignals mit ausgewählter Verstärkung, wobei das Anforderungstastsignal einen ein Maß für eine gewünschte Verstärkung für das Ausgangsvideosignal darstellenden Wert besitzt, die Verstärkung des ersten Eingangsvideosignals durch den Wert eines Eingangstastsignals (K_{A}) identifiziert ist und der Wert des Eingangstastsignals die Verstärkung des Eingangsvideosignals relativ zu einem Bezugspegel angibt, mit
einer Schaltung (86) zur Berechnung des Verhältnisses des Anforderungstastsignals und des Eingangstastsignals,
einer Schaltung (72) zur Einstellung der Verstärkung des ersten Eingangsvideosignals in Abhängigkeit vom Verhältnis zwecks Erzeugung eines ersten in der Verstärkung eingestellten Videosignals (A''),
einem Eingang (94) zur Aufnahme des zweiten Eingangsvideosignals,
einer das Anforderungstastsignal von einer Bezugsverstärkung subtrahierenden Schaltung (92) zur Erzeugung eines Differenztastsignals (1-K_{D}),
einer Schaltung (90) zur Einstellung der Verstärkung des zweiten Eingangsvideosignals durch das Differenztastsignal zwecks Erzeugung eines zweiten in der Verstärkung eingestellten Videosignals (B') und
einer Schaltung (96) zur Kombination des zweiten in der Verstärkung eingestellten Videosignals mit dem ersten in der Verstärkung eingestellten Videosignal zwecks Erzeugung des Ausgangsvideosignals.

7. Schaltungsanordnung nach Anspruch 6 mit einer Schaltung (82) zur Aufnahme eines unabhängigen Tastsignals (K_{I}) und des Eingangstastsignals (K_{A}) sowie zur Ausgabe des Minimums dieser beiden Tastsignale als Anforderungstastsignal.

8. Schaltungsanordnung zur Einstellung der Verstärkung eines ersten und zweiten Eingangsvideosignals (A', B') in Abhängigkeit von einem ersten Anforderungstastsignal (K_{DA}) und einem zweiten Anforderungstastsignal (K_{DB}) sowie zur Kombination der beiden so erzeugten in der Verstärkung eingestellten Videosignale (A'', B'') zwecks Erzeugung eines Ausgangsvideosignals (C') mit einer ausgewählten Verstärkung, wobei das erste Anforderungstastsignal einen ein Maß für eine gewünschte Verstärkung für das erste Eingangsvideosignal darstellenden Wert besitzt, das zweite Anforderungstastsignal einen ein Maß für eine gewünschte Verstärkung für das zweite Eingangsvideosignal darstellenden Wert besitzt, die Verstärkung des ersten Eingangsvideosignals relativ zu einem Bezugspegel durch den Wert eines ersten Eingangstastsignals (K_{A}) identifiziert ist und die Verstärkung des zweiten Eingangsvideosignals relativ zu einem Bezugspegel durch den Wert des zweiten Eingangstastsignals (K_{B}) identifiziert ist, mit
einer Schaltung (116) zur Berechnung des Verhältnisses des ersten Anforderungstastsignals und des ersten Eingangstastsignals zwecks Erzeugung eines ersten Verarbeitungstastsignals (K_{PA}),
einer Schaltung (102) zur Einstellung der Verstärkung des ersten Eingangsvideosignals in Abhängigkeit vom ersten Verarbeitungstastsignal zwecks Erzeugung eines ersten in der Verstärkung eingestellten Videosignals,
einem Eingang zur Aufnahme des zweiten Eingangsvideosignals,
einer das erste Anforderungstastsignal von einer Bezugsverstärkung subtrahierenden Schaltung (112) zur Erzeugung eines Differenztastsignals (1-K_{DA}),
einer das Differenztastsignal (1-K_{DA}) und das zweite Eingangstastsignal (K_{B}) aufnehmenden Schaltung (136) zur Ausgabe des Minimums des Differenztastsignals und des zweiten Eingangstastsignals als zweites Anforderungssignal (K_{DB}),
einer Schaltung (134) zur Berechnung des Verhältnisses des zweiten Anforderungstastsignals und des zweiten Eingangstastsignals zur Erzeugung eines zweiten Verarbeitungstastsignal (K_{PB}),
einer Schaltung (120) zur Einstellung der Verstärkung des zweiten Eingangsvideosignals in Abhängigkeit vom zweiten Verarbeitungstastsignal zwecks Erzeugung eines zweiten in der Verstärkung eingestellten Videosignals und
einer Schaltung (126) zur Kombination des zweiten in der Verstärkung eingestellten Videosignal mit dem ersten in der Verstärkung eingestellten Videosignal zwecks Erzeugung des die ausgewählte Verstärkung besitzenden Ausgangsvideosignals.

9. Schaltungsanordnung nach Anspruch 8 mit einer Schaltung (112) zur Aufnahme eines unabhängigen Tastsignals (K_{I}) und des ersten Eingangstastsignals (K_{A}) sowie zur Ausgabe des Minimums des unabhängigen Tastsignals und des ersten Eingangstastsignals als erstes Anforderungstastsignal (K_{DA}).

10. Verfahren zur Einstellung der Verstärkung eines Eingangssignals (A') zwecks Erzeugung eines in der Verstärkung eingestellten Signals, bei dem
ein Eingangstastsignal (K_{A}) bereitgestellt wird, dessen Wert die Verstärkung des Eingangssignals relativ zu einem Bezugspegel angibt,
ein Anforderungstastsignal (K_{I}) bereitgestellt wird, dessen Wert die gewünschte Verstärkung für das in der Verstärkung eingestellte Signal angibt, und
die Verstärkung des Eingangssignals in Abhängigkeit vom Verhältnis des Anforderungstastsignals und des Eingangstastsignals eingestellt wird.

11. Verfahren nach Anspruch 10, bei dem das Verhältnis durch Bildung des Kehrwertes des Eingangstastsignals (K_{A}) berechnet wird und zur Einstellung das Eingangssignal mit dem Kehrwert (1/K_{A}) und dem Anforderungstastsignal (K_{I}) multipliziert wird.

12. Verfahren nach Anspruch 9 oder 10, bei dem das Anforderungstastsignal aus dem Minimum des Eingangstastsignals und einem unabhängigen Tastsignal gewonnen wird.

13. Verfahren nach den Ansprüchen 10 bis 12, bei dem
das Anforderungstastsignal (K_{D}) zur Erzeugung eines Differenztastsignals (1-K_{D}) von der Bezugsverstärkung subtrahiert wird,
ein zweites Eingangssignal (B') bereitgestellt wird, und
die Verstärkung des zweiten Eingangssignals in Abhängigkeit vom Differenztastsignal eingestellt wird.

14. Verfahren nach den Ansprüchen 10 bis 12, bei dem
das Anforderungstastsignal (K_{DA}) zur Erzeugung eines Differenztastsignals (1-K_{DA}) von der Bezugsverstärkung subtrahiert wird,
ein zweites Eingangssignal (B') in Verbindung mit einem zweiten Eingangstastsignal (K_{B}) bereitgestellt wird, dessen Wert die Verstärkung des Eingangssignals (B') relativ zu einer Bezugsverstärkung angibt,
aus dem Minimum des Differenztastsignals und des zweiten Eingangstastsignals ein zweites Anforderungstastsignal (K_{DB}) gebildet wird und
die Verstärkung des zweiten Eingangssignals (B') in Abhängigkeit vom Verhältnis des zweiten Anforderungstastsignals (K_{DB}) und des zweiten Eingangstastsignals (K_{B}) eingestellt wird.

15. Verfahren nach den Ansprüchen 10 bis 14, bei dem das oder die Eingangssignale (A'; B') ein Videosignal sind.

## Revendications

1. Dispositif pour ajuster le gain d'un signal vidéo d'entrée (A') en réponse à un signal de gradation de demande (K_{D}) pour produire un signal vidéo de sortie ayant un gain choisi, ledit signal de gradation de demande ayant une valeur indiquant un gain souhaité pour ledit signal vidéo de sortie, dans lequel le gain du signal vidéo d'entrée est identifié par la valeur d'un signal de gradation d'entrée (K_{A}) et la valeur du signal de gradation d'entrée indique le gain du signal vidéo d'entrée par rapport à un niveau de référence, le dispositif étant conçu pour ajuster le gain dudit signal vidéo d'entrée en fonction du rapport du signal de gradation de demande au signal de gradation d'entrée.

2. Dispositif selon la revendication 1, comprenant en outre un moyen pour recevoir un signal de gradation indépendant (K_{I}) et ledit signal de gradation d'entrée (K_{A}) et pour sortir le minimum dudit signal de gradation indépendant et dudit signal de gradation d'entrée comme ledit signal de gradation de demande (K_{D}).

3. Dispositif selon la revendication 1 ou la revendication 2, dans lequel le gain du signal vidéo d'entrée est ajusté par un moyen de multiplication du signal vidéo en fonction de l'inverse du signal de gradation d'entrée et un moyen de multiplication du signal vidéo en fonction du signal de gradation de demande (K_{D}).

4. Dispositif pour ajuster le gain d'un signal vidéo d'entrée (A') en réponse à un signal de gradation de demande (K_{D}) pour produire un signal vidéo de sortie (A'') ayant un gain choisi, ledit signal de gradation de demande (K_{D}) ayant une valeur indiquant un gain souhaité pour ledit signal vidéo de sortie, dans lequel ledit gain dudit signal vidéo d'entrée est identifié par la valeur d'un signal de gradation d'entrée (K_{A}) et ladite valeur du signal de gradation d'entrée indique le gain du signal vidéo d'entrée par rapport à un gain de référence, comprenant :
un moyen (66) pour calculer le rapport (K_{D}/K_{A}) dudit signal de gradation de demande audit signal de gradation d'entrée ; et
un moyen (59) de réglage du gain dudit signal vidéo d'entrée en fonction dudit rapport pour donner ledit signal vidéo de sortie qui a ledit gain choisi.

5. Dispositif selon la revendication 4, comprenant en outre un moyen (62) pour recevoir un signal de gradation indépendant (K_{I}) et ledit signal de gradation d'entrée (K_{A}) et pour sortir le minimum de ces deux signaux de gradation comme ledit signal de gradation de demande (K_{D}).

6. Dispositif pour ajuster le gain de premier et second signaux vidéo d'entrée (A', B) en réponse à un signal de gradation de demande (K_{D}) pour produire un signal vidéo de sortie ayant un gain choisi, ledit signal de gradation de demande ayant une valeur indiquant un gain souhaité pour ledit signal vidéo de sortie, dans lequel ledit gain dudit premier signal vidéo d'entrée est identifié par la valeur d'un signal de gradation d'entrée (K_{A}) et ladite valeur dudit signal de gradation d'entrée indique le gain dudit premier signal vidéo d'entrée par rapport à un niveau de référence, comprenant :
un moyen (86) de calcul du rapport du signal de gradation de demande audit signal de gradation d'entrée ;
un moyen (72) de réglage du gain dudit premier signal vidéo d'entrée en fonction dudit rapport pour donner un premier signal vidéo ajusté en gain ;
une entrée (94) pour recevoir le second signal vidéo d'entrée ;
un moyen (92) de soustraction du signal de gradation de demande d'un gain de référence pour produire un signal de gradation différence (1-K_{D}) ;
un moyen (90) de réglage du gain du second signal vidéo d'entrée par ledit signal de gradation différence pour donner un second signal vidéo ajusté en gain (B') ; et
un moyen (96) pour combiner le second signal vidéo ajusté en gain avec le premier signal vidéo ajusté en gain pour fournir le signal vidéo de sortie.

7. Dispositif selon la revendication 6, comprenant en outre un moyen (82) pour recevoir un signal de gradation indépendant (K_{I}) et ledit signal de gradation d'entrée (K_{A}) et pour sortir le minimum de ces deux signaux de gradation comme ledit signal de gradation de demande.

8. Dispositif pour régler le gain de premier et second signaux vidéo d'entrée (A', B') en réponse à un premier signal de gradation de demande (K_{DA}) et un second signal de gradation de demande (K_{DB}) et pour combiner les deux signaux vidéo ajustés en gain (A'', B'') ainsi produits pour produire un signal vidéo de sortie (C') ayant un gain choisi, dans lequel ledit premier signal de gradation de demande a une valeur indiquant un gain souhaité pour le premier signal vidéo d'entrée, ledit second signal de gradation de demande a une valeur indiquant un gain souhaité pour le second signal d'entrée, le gain du premier signal vidéo d'entrée par rapport à un niveau de référence est identifié par la valeur d'un premier signal de gradation d'entrée (K_{A}) et le gain du second signal vidéo d'entrée par rapport à un niveau de référence est identifié par la valeur d'un second signal de gradation d'entrée (K_{B}), le dispositif comprenant :
un moyen (116) de calcul du rapport du premier signal de gradation de demande au premier signal de gradation d'entrée pour produire un premier signal de gradation de traitement (K_{PA}) ;
un moyen (102) de réglage du gain dudit premier signal vidéo d'entrée en fonction dudit premier signal de gradation de traitement pour donner un premier signal vidéo ajusté en gain ;
une entrée pour recevoir le second signal vidéo d'entrée ;
un moyen (112) de soustraction du premier signal de gradation de demande d'un gain de référence pour produire un signal de gradation différence (1-K_{DA}) ;
un moyen (136) pour recevoir ledit signal de gradation différence (1-K_{DA}) et ledit second signal de gradation d'entrée (K_{B}) et pour sortir le minimum dudit signal de gradation différence et dudit second signal de gradation d'entrée comme second signal de demande (K_{DB}) ;
un moyen (134) de calcul du rapport dudit second signal de gradation de demande au second signal de gradation d'entrée pour produire un second signal de gradation de traitement (K_{PB}) ;
un moyen (120) de réglage du gain dudit second signal vidéo d'entrée en fonction du second signal de gradation de traitement pour donner un second signal vidéo ajusté en gain ; et
un moyen (126) de combinaison dudit second signal vidéo ajusté en gain avec ledit premier signal vidéo ajusté en gain pour produire le signal vidéo de sortie qui a ledit gain choisi.

9. Dispositif selon la revendication 8, comprenant en outre un moyen (112) pour recevoir un signal de gradation indépendant (K_{I}) et ledit signal de gradation d'entrée (K_{A}) et pour sortir le minimum dudit signal de gradation indépendant et dudit signal de gradation d'entrée comme ledit signal de gradation de demande (K_{DA}).

10. Procédé pour ajuster le gain d'un signal d'entrée (A') pour produire un signal ajusté en gain, comprenant :
la délivrance d'un signal de gradation d'entrée (K_{A}) dont la valeur indique le gain dudit signal d'entrée par rapport à un niveau de référence ;
la délivrance d'un signal de gradation de demande (K_{I}) dont la valeur indique le gain souhaité pour le signal ajusté en gain ; et
le réglage du gain du signal d'entrée en fonction du rapport du signal de gradation de demande au signal de gradation d'entrée.

11. Procédé selon la revendication 10, dans lequel ledit rapport est calculé en formant l'inverse du signal de gradation d'entrée (K_{A}) et dans lequel l'étape de réglage comprend la multiplication du signal d'entrée par ledit inverse (1/K_{A}) et par le signal de gradation de demande (K_{I}).

12. Procédé selon la revendication 9 ou 10, dans lequel le signal de gradation de demande est obtenu à partir du minimum dudit signal de gradation d'entrée et d'un signal de gradation indépendant.

13. Procédé selon l'une quelconque des revendications 10 à 12, comprenant de plus :
la soustraction du signal de gradation de demande (K_{D}) du gain de référence pour produire un signal de gradation différence (1-K_{D}) ;
la délivrance d'un second signal d'entrée (B') ; et,
le réglage du gain du second signal d'entrée en fonction du signal de gradation différence.

14. Procédé selon l'une quelconque des revendications 10 à 12, comprenant de plus :
la soustraction du signal de gradation de demande (K_{DA}) du gain de référence pour produire un signal de gradation différence (1-K_{DA}) ;
la délivrance d'un second signal d'entrée (B') accompagné par un second signal de gradation d'entrée (K_{B}) dont la valeur indique le gain du second signal d'entrée (B') par rapport à un gain de référence ;
la formation du minimum du signal de gradation différence et du second signal de gradation d'entrée comme second signal de gradation de demande (K_{DB}) ;
et le réglage du gain dudit second signal d'entrée (B') en fonction du rapport du second signal de gradation de demande (K_{DB}) au second signal de gradation d'entrée (K_{B}).

15. Procédé selon l'une quelconque des revendications 10 à 14, dans lequel le, ou chaque, signal d'entrée (A' ; B') est un signal vidéo.
